Europäisches Patentamt

European Patent Office

Office européen des brevets

(19)

(11) **EP 0 777 881 B1**

(12) **EUROPÄISCHE PATENTSCHRIFT**

(45) Veröffentlichungstag und Bekanntmachung des Hinweises auf die Patenterteilung:
**27.05.1998 Patentblatt 1998/22**

(21) Anmeldenummer: **95928440.7**

(22) Anmeldetag: **17.08.1995**

(51) Int Cl.⁶: **G06F 15/80**

(86) Internationale Anmeldenummer:
**PCT/DE95/01090**

(87) Internationale Veröffentlichungsnummer:
**WO 96/06400 (29.02.1996 Gazette 1996/10)**

(54) **VERFAHREN ZUR FESTLEGUNG DES GÜLTIGKEITSBEREICHS FÜR EIN KÜNSTLICHES NEURONALES NETZWERK**

METHOD OF DETERMINING THE VALIDITY RANGE FOR AN ARTIFICIAL NEURAL NETWORK

PROCEDE PERMETTANT DE DETERMINER LE CHAMP D'APPLICATION D'UN RESEAU NEURONAL ARTIFICIEL

(84) Benannte Vertragsstaaten:
**DE FR GB**

(30) Priorität: **24.08.1994 DE 4430024**

(43) Veröffentlichungstag der Anmeldung:
**11.06.1997 Patentblatt 1997/24**

(73) Patentinhaber: **SIEMENS AKTIENGESELLSCHAFT**
**80333 München (DE)**

(72) Erfinder: **HÖHFELD, Markus**
**D-81373 München (DE)**

(56) Entgegenhaltungen:
**WO-A-94/12948**

- **NEURAL NETWORKS, ELSEVIER LTD, Bd. 7, Nr. 1, 1994 USA, Seiten 169-174, COURRIEU 'Three algorithms for estimating the domain of validity of feedforward neural networks'**
- **INTERNATIONAL JOINT CONFERENCE ON NEURAL NETWORKS (IJCNN), SAN DIEGO, JUNE 17 - 21, 1990, Bd. VOL. 1, Nr. -, 17.Juni 1990 INSTITUTE OF ELECTRICAL AND ELECTRONICS ENGINEERS, Seiten 97-100, XP 000144199 BOCHEREAU L ET AL 'RULE EXTRACTION AND VALIDITY DOMAIN ON A MULTILAYER NEURAL NETWORK'**
- **PROCEEDINGS OF THE INTERNATIONAL CONFERENCE ON NEURAL NETWORKS, PARIS, JULY 9 - 13, 1990, Bd. 1, 9.Juli 1990 INSTITUTE OF ELECTRICAL AND ELECTRONICS ENGINEERS, Seiten 119-122, XP 000145249 LEFEBVRE T ET AL 'NUMERICAL TO SYMBOLICAL CONVERSION FOR ACOUSTIC SIGNAL CLASSIFICATION USING A TWO-STAGE NEURAL ARCHITECTURE'**
- **NEURAL NETWORKS, Bd. 6, Nr. 3, 1.Januar 1993 Seiten 397-407, XP 000363032 MUSAVI M T 'A MINIMUM ERROR NEURAL NETWORK (MNN)'**

**Beschreibung**

Viele nichtlineare Abhängigkeiten, z.B. in verfahrenstechnischen Prozessen, lassen sich analytisch, d.h. in mathematisch geschlossener Form, nur unzureichend beschreiben. Der Aufwand für die Entwicklung detaillierter Prozeßmodelle ist viel zu groß und in vielen Fällen aufgrund von kleinen Fertigungslosen und wegen der Prozeßdrift auch nicht gerechtfertigt. Wirtschaftlich vertretbar ist jedoch die empirische Modellbildung anhand von Meßdaten.

Dazu wird das zu modellierende System durch Messungen erfaßt. Anhand der Meßwerte kann dann auf empirischem Wege ein Modell erstellt werden. Hierzu eignen sich z.B. neuronale Netze, die mehrdimensionale nichtlineare Zusammenhänge hervorragend approximieren können. Die empirische Modellbildung erfolgt also nicht durch Programmierung oder Aufstellen von Regeln und Gleichungen, sondern mittels eines automatischen Lernalgorithmus anhand von Meßdaten.

Im Bereich verfahrenstechnischer Anwendungen ist die Verteilung der Lerndaten ein gravierendes Problem, denn es ist unmöglich, einen technischen Prozeß vollständig durchzumessen, weil z.B.

- die Anlagenverfügbarkeit gewährleistet sein muß, d.h. nur Meßdaten aus dem laufenden Betrieb zur Verfügung stehen,
- die Prozesse sehr große Zeitkonstanten (mehrere Stunden) haben und zur Erzeugung der Lerndaten nur eine bestimmte Testzeit zur Verfügung steht, oder
- es verbotene Bereiche gibt, in denen der Prozeß nicht betrieben werden sollte.

Als Folge davon stehen für die empirische Modellbildung bzw. Systemidentifikation nur partielle Daten aus einem Teilraum der möglichen Betriebszustände zur Verfügung; die empirische Modellierung (z.B. mit neuronalen Netzen) liefert also nur für diesen Teilbereich ein gültiges Prozeßmodell.

Im Betrieb treten jedoch unter Umständen Prozeßzustände auf, die in den Lerndaten nicht erfaßt waren. Aus Sicherheitsgründen ist es notwendig, solche Eingabekombinationen zu erkennen, um mit geeigneten geänderten Strategien den Prozeß weiterhin sicher zu führen. Als technisches Problem ergibt sich zum einen die Erkennung des Gültigkeitsbereichs (z.B. in Form einer ja/nein-Entscheidung), zum anderen die Entwicklung von "weichen" Überblendstrategien beim Verlassen des Gültigkeitsbereichs. Ohne Zusatzmaßnahmen beim Netzentwurf und Training läßt sich über das Netzverhalten außerhalb der Meßdaten keine Aussage machen.

Vielen Anwendungen der empirischen Modellbildung liegt (wie ganz allgemein der Anwendung neuronaler Netze) die Annahme zugrunde, daß die Lerndaten genauso verteilt sind, wie die Daten, die später bei der Verwendung des Modells vorkommen. Unter dieser Annahme sind auch Lerndaten, die auf bestimmte Unterräume des gesamten Datenraums beschränkte sind, nicht problematisch, weil im Betrieb auch wieder nur solche Daten vorkommen.

Eine Lösung der Problematik partieller (oder besser: partiell repräsentativer) Daten ist die Erzeugung zusätzlicher Trainingsdaten anhand einer Formel [RH 92]. Dieses Verfahren hat hauptsächlich drei Nachteile. Erstens wächst die Modellkomplexität. Zweitens kommt es im Bereich der Lerndaten zu einer Mittelung zwischen den empirischen und den analytischen Daten. Drittens steht für Sicherheitsanforderungen kein Ausgang zur Verfügung, der anzeigt, ob man sich innerhalb der Reichweite empirisch erfaßter Prozeßzustände befindet oder nicht.

Die beschriebene Aufgabenstellung tritt auch in anderen Bereichen der Technik - außerhalb der Prozeßsteuerung - auf.

Aus dem Dokument WO 94/12948 ein System zur Festlegung des Gültigkeitsbereich eines neuronalen Netzes bekannt. Das System stellt fest, ob ein Ausgangswert des neuronalen Netzes verwendet, modifiziert oder ersetzt Erde soll. Das System arbeitet nach einem Verfahren, bei dem nach Durchführung eines Clustering-Verfahrens für die Trainingsdatensätze für jedes Cluster eine lokale Zugehörigkeitsfunktion mit einer Gauss-Funktion versehen wird. Bei dieser lokalen Zugehörigkeitsfunktion werden jedoch lediglich die statistischen Varianzen der Trainingsdaten des jeweiligen Clusters berücksichtigt. Desweiteren wird bei dem Verfahren eine feste, abrupte Schwelle für die lokalen Zugehörigkeitsfunktionen festgelegt, abhängig von den statistischen Varianzen.

Das Verfahren weist eine Vielzahl von Nachteilen auf. Zum einen wird bei diesem Verfahren implizit vorausgesetzt, daß die Trainingsdaten innerhalb der Cluster alle normal verteilt sind. Diese Voraussetzung ist jedoch üblicherweise nicht gegeben. Ferner ist das Verfahren bei mehrdimensionalen Gauss-Funktionen sehr aufwendig durchzuführen.

Der Erfindung liegt die Aufgabe zugrunde, ein Verfahren zur Festlegung des Gültigkeitsbereichs für ein künstliches neuronales Netz anzugeben, welches die beschriebenen Probleme vermeidet.

Diese Aufgabe wird erfindungsgemäß durch ein Verfahren zur Festlegung des Gültigkeitsbereichs für ein künstliches neuronales Netzwerk mit Merkmalen nach Anspruch 1 gelost. Dazu wird die Dichte der Trainingsdaten, die zur Bestimmung der Netzwerkparameter verwendet werden, mit Hilfe einer linearen Überlagerung einer geeignet gewählten Anzahl von Gauß-Funktionen angenähert; hierbei werden Mittelwert-Vektoren und Kovarianzmatrizen in der Weise ermittelt, daß der Satz von Trainingsdaten in Teildatensätze unterteilt wird, denen jeweils ein Mittelwert-Vektor zugeordnet ist. Die Trainingsdaten eines jeden Teildatensatzes liegen dabei näher an dem diesem Teildatensatz zugeordneten Mittelwert-Vektor als an irgendeinem der anderen Mittelwertvektoren. Die Kovarianzen werden daraufhin so skaliert, daß die lineare Überlagerung von Gauß-Funktionen für einen geeignet gewählten Anteil der Trainingsdaten einen vorgegebenen Wert erreicht. Schließlich wird ein Punkt des Trainingsdatenraums dann als zum Gültlgkeitsbereich des künstlichen neuronalen Netzes gehörig angesehen, wenn die lineare Überlagerung von Gauß-Funktionen für diesen Punkt den vorgegebenen Wert erreicht.

Die Kenntnis des Gültigkeitsbereichs eines neuronalen Netzes kann nun dazu verwendet werden, je nach Anwendungsfall in unterschiedlicher Weise zu verfahren, wenn dieser Gültigkeitsbereich verlassen wird. Diese unterschiedlichen Verfahrensweisen haben gemeinsam, daß eine Ersatzfunktion (Default-Funktion), z.B. in Gestalt einer Ersatzformel, benötigt wird, um das künstliche neuronale Netz außerhalb seines Gültigkeitsbereiches zu ersetzen. Eine solche Ersatzformel kann z.B. eine grobe Schätzung oder Näherung des gewünschten Systemverhaltens sein, die zwar keine optimalen, aber immerhin noch brauchbaren Ergebnisse bringt. In anderen Fällen kann die Ersatzformel auch einmal gar keine Näherung für das gewünschte Systemverhalten sein, sondern ein anderes Systemverhalten beschreiben, welches zwar nicht im Sinne der Anwendung produktiv aber dafür immerhin sicher in dem Sinne ist, daß durch Anwendung der Ersatzformel eine Gefahrensituation wirksam vermieden wird.

In Abhängigkeit von der konkreten, im Einzelfall vorliegenden Anwendung, können dabei unterschiedliche Strategien vorteilhaft sein.

Zum einen ist es möglich, mit Hilfe der Ersatzfunktion zusätzliche Trainingsdaten zu erzeugen und das Netzwerk mit diesen zu trainieren. Um eine Mittelung zwischen dem empirischen Modell und der Ersatzfunktion zu vermeiden, ist es dabei vorteilhaft, diese zusätzlichen Trainingsdaten nur außerhalb des Gültigkeitsbereichs zu erzeugen.

Eine zweite Möglichkeit besteht darin, zwischen der Ersatzfunktion und dem neuronalen Netz zu interpolieren. Dabei wird eine gewichtete Mittelung der Werte der Ersatzfunktion und des neuronalen Netzwerks verwendet, deren Koeffizienten durch den Grad der Gültigkeit des Netzwerks in dem jeweiligen Punkt gegeben sind. Dabei wird die Ersatzfunktion im Innern des Gültigkeitsbereiches vorzugsweise mit Null gewichtet.

Ein dritter Weg besteht darin, das Netz die Differenz zwischen den Meßdaten und den Werten der Ersatzfunktion lernen zu lassen. Außerhalb der Meßdaten gibt das Netz dann den Wert Null aus. Beim Einsatz des Netzwerks werden dann zu den Werten der Ersatzfunktion die Ausgabewerte des Netzwerks addiert. Wie bei der zweiten Möglichkeit werden auch hier Zusatzdaten außerhalb des Meßdatenbereichs verwendet, mit denen das Null-Verhalten sichergestellt wird. Dieses Verfahren eignet sich besonders für empirische Modelle, die weit außerhalb des Gültigkeitsbereichs Null ausgeben, z.B. radiale Basisfunktionsnetze. Zur Modellierung der Ersatzfunktion werden dann nämlich im Gegensatz zur zweiten Möglichkeit keine zusätzlichen Ressourcen benötigt.

Figur 1 zeigt eine schematische Darstellung eines stark vereinfachten Beispiels, an welchem das erfindungsgemäße Verfahren erläutert werden kann.

Figur 2 zeigt eine Approximation mit einem Multi-Layer-Perceptron mit 10 versteckten (hidden) Neuronen und zusätzlichem Default-Verhalten im gesamten Eingaberaum.

Im folgenden wird die Erfindung anhand bevorzugter Ausführungsbeispiele und mit Hilfe der Figuren näher beschrieben.

Hier bietet sich der Einsatz neuronaler Netze an, deren Fähigkeit zur Approximation mehrdimensionaler nichtlinearer Zusammenhänge in zahllosen Arbeiten nachgewiesen wurde. Die Modellbildung erfolgt bei neuronalen Netzen nicht durch Programmierung oder Aufstellen von Regeln und Gleichungen, sondern mittels eines automatischen Lernalgorithmus anhand von Meßdaten.

Im Bereich verfahrenstechnischer Anwendungen stellt sich jedoch das Problem der Qualität der Lerndaten aus dem Blickpunkt der Meßdatenerfassung und der Sicherheitsanforderungen neu. Üblicherweise liegen Meßdaten nur in einem Teilbereich des Eingaberaumes des neuronalen Netzwerkes vor. Die empirische Modellierung mit neuronalen Netzen liefert also nur für diesen Teilbereich ein gültiges Prozeßmodell. Ohne Zusatzmaßnahmen beim Netzwerkentwurf und beim Training, läßt sich über das Netzwerkverhalten außerhalb der Meßdaten keine Aussage machen.

Im Betrieb treten jedoch unter Umständen Prozeßzustände auf, die in den Lerndaten nicht erfaßt waren. Aus Sicherheitsgründen ist es daher notwendig, solche Eingabekombinationen zu erkennen und/oder zu garantieren, daß das Netz auch abseits der Meßdaten eine wohldefinierte und brauchbare Antwort liefert.

In dieser Patentanmeldung wird ein Verfahren zur Ermittlung des Gültigkeitsbereichs neuronaler Netze angegeben, die mit partiell repräsentativen Trainingsdaten trainiert wurden. Die Kenntnis dieses Gültigkeitsbereichs kann dazu verwendet werden, trotz unvollständiger Lerndaten im gesamten Eingabebereich zu wohl definierten Ausgaben des Netzwerks zu gelangen. Obwohl das erfindungsgemäße Verfahren auch außerhalb der Verfahrenstechnik anwendbar ist, nimmt die vorliegende Darstellung des erfindungsgemäßen Verfahrens speziell auf verfahrenstechnische Anwendungen bezug, die sich wie folgt charakterisieren lassen:

- Aus Sicherheitsgründen muß ein wohldefiniertes und brauchbares Netzverhalten auch in den Eingabebereichen gewährleistet werden, in denen es keine Trainings-Meßdaten gibt.

- Die verfügbare Rechnerleistung und der beschränkte Speicherplatz der Automatisierungssysteme erfordern kompakte Repräsentationen in kleinen Netzen.

- Regelungstechnische Anwendungen erfordern "glatte" Approximationen mit möglichst wenigen Wendepunkten.

- Effiziente Lernverfahren sind vorteilhaft, auch auf Kosten der Qualität.

Um definiertes Verhalten abseits der Meßdaten zu erzwingen, müssen die Extrapolationsanforderungen explizit als Vorwissen in die Trainings- und/oder Anwendungsphase (Recall-Phase) eingebracht werden. Abhängig von der Art und Weise, wie dieses Vorwissen vorliegt, bieten sich verschiedene Lösungsmöglichkeiten für das Problem partieller Lerndatensätze an.

Ist der funktionale Zusammenhang zwischen Ein- und Ausgaben in seiner Struktur global (also auch außerhalb der Meßdaten) bis auf wenige Parameter bekannt, so kann global korrektes Verhalten durch spezielle Netzstrukturen erreicht werden.

Liegt eine grobe Approximation über den gesamten Eingaberaum bereits vor, z. B. als Formel oder Regelsatz, so können den Meßdaten zusätzliche, aus den Formeln generierte Daten beigemischt werden. Außerhalb der Meßdaten lernt das Netz dann nur Formeldaten und benützt somit die Formel zur Extrapolation, während es im Bereich der Meßdaten eine Mittelung zwischen Formel-Vorwissen und Daten lernt.

Insbesondere berücksichtigt die vorliegende Darstellung der Erfindung den Fall, daß ein bestimmtes Default-Verhalten nur im nicht repräsentierten Eingaberaum sichergestellt werden soll, wogegen im Meßdatenbereich nur anhand der Meßdaten approximiert werden soll. Eine Mittelung innerhalb des Gültigkeitsbereichs der Meßdaten ist also ausdrücklich nicht erwünscht. In diesem Fall muß zunächst der Eingaberaum durch ein Clusterverfahren in die Bereiche mit und ohne Trainingsdaten partitioniert werden. Mit Hilfe der Clusterinformation läßt sich dann eine Zugehörigkeitsfunktion für den Meßdatenbereich aufstellen.

Netzantwort und gewünschtes Default-Verhalten können dann auf unterschiedliche Art unter Berücksichtigung der Zugehörigkeitsfunktion kombiniert werden. Es zeigt sich einerseits, daß eine Trennung von Zugehörigkeitsfunktion und Modellfunktion zu genaueren Approximationen führt, daß aber andererseits mit kombinierten Verfahren auch akzeptable Resultate bei verringertem Rechenaufwand möglich sind.

Zur Darstellung des erfindungsgemäßen Verfahrens werden die Aufgabenstellung und die beschriebenen Netzwerktypen zunächst weiter konkretisiert und soweit erforderlich, die zur Darstellung der erfindungsgemäßen Verfahren erforderlichen Schreibweisen eingeführt.

Zur Vereinfachung der Darstellung der Erfindung im Rahmen dieser Anmeldung werden ohne Beschränkung der Allgemeinheit sämtliche Ein- und Ausgaben auf den Bereich [-1...1] und den Mittelwert 0 skaliert, unter Umständen nachdem zuvor Meßdatenfehler und Ausreißer eliminiert wurden. Ferner wird das erfindungsgemäße Verfahren aus Gründen der Übersichtlichkeit für den Fall diagonaler Kovarianzmatrizen dargestellt; der Fachmann weiß jedoch, wie er die Erfindung anhand der vorliegenden Beschreibung auf den Fall nichtdiagonaler Kovarianzmatrizen verallgemeinern kann. Die Problematik des partiellen Lernens läßt sich dann wie folgt definieren:

Gegeben sei ein Meßdatensatz mit Eingaben $\mathbf{x} \in \mathbf{D} \subseteq [-1,1]^n$ und Ausgaben $\mathbf{y} \in [-1,1]^m$. Der in den Meßdaten repräsentierte Eingabebereich D ist nicht explizit bekannt, sondern implizit durch die Daten definiert. Gegeben sei ferner das gewünschte Default-Verhalten in Form einer Ersatzfunktion (Default-Funktion) $f:[-1, 1]^n \rightarrow [-1, 1]^m$. Ziel des partiellen Lernens ist es nun, eine Approximationsfunktion NN zu finden, die innerhalb des Meßdatenbereichs die Daten repräsentiert und außerhalb das Default-Verhalten (d.h. das Verhalten der Default-Funktion) zeigt.

Schon aus der Definition der Aufgabenstellung wird deutlich, daß eine wichtige Aufgabe des partiellen Lernens darin besteht, eine geeignete Repräsentation des Eingabebereichs D zu finden. Als Grundlage dafür wird als Abstandsmaß der gewichtete euklidische Abstand

$$(1) \qquad \mathrm{dist}(x, y; s) = \sum_{j=1}^{d} s_j^2 (x_j - y_j)^2$$

verwendet. Als Zugehörigkeitsfunktion werden k Gauß-Glocken (Gauß-Funktionen) mit Zentren $\mu$ und Gewichtung $\mathbf{s}=\sigma^{-1}$ gemäß

4

$$(2) \qquad D(x) = \exp(1/2) \sum_{i=1}^{k} \exp(-1/2 \sum_{j=1}^{d} s_{ij}^2 (x_j - \mu_{ij})^2)$$

überlagert. Datenpunkte in der Nähe der Zentren haben einen großen Zugehörigkeitswert. Mit wachsendem Abstand von den Zentren geht die Zugehörigkeit exponentiell gegen 0. Dabei definieren die einzelnen Gauß-Glocken achsenparallele Ellipsen. Diese Zugehörigkeitsfunktion ist stetig differenzierbar und kann mit zusätzlicher Normierung auch als Dichtefunktion interpretiert werden.

Durch den Skalierungsfaktor exp(0,5) wird erreicht, daß Datenpunkte, deren gewichteter Abstand zu wenigstens einem Zentrum kleiner als 1 ist, für die also gilt

$$(3) \qquad \sum_{j=1}^{d} s_{ij}^2 (x_j - \mu_{ij})^2 \leq 1$$

für mindestens ein i einen Zugehörigkeitsgrad **D(x)**≥**1** besitzen. Diese Normierung vereinfacht die folgenden Darstellungen.

Anhand der Zugehörigkeitsfunktion läßt sich nun eine ternäre Indikatorfunktion $\chi_D$ für D definieren mit der Eigenschaft, daß ein Datenpunkt x mit **D(x)**≥**1** zum Meßbereich gehört und ein Datenpunkt x mit **D(x)**≤ε definitiv außerhalb liegt:

$$(4) \qquad \chi_D(x) = \begin{cases} 1 & \text{für } D(x) \geq 1 \\ 0.5 & \text{für } \varepsilon < D(x) < 1 \\ 0 & \text{für } D(x) \leq \varepsilon \end{cases}$$

Die Zugehörigkeitsfunktion D(x) wird im Zusammenhang mit neuronalen Netzen verwendet. Hierzu sind besonders drei Netzwerktypen besonders geeignet: mehrschichtige Perceptrons (MLP), radiale Basisfunktionsnetze (RBF) und normierte radiale Basisfunktionsnetze (RBF1). Die Netze sind durch folgende Formeln definiert, wobei zur Vereinfachung aber ohne Beschränkung der Allgemeinheit angenommen wird, daß nur ein Ausgang vorhanden ist:

$$(5) \qquad MLP(x) = \sum_{i=1}^{k} w_i \cdot \tanh\left( \sum_{j=1}^{d} v_{ij} \cdot x_j \right)$$

$$(6) \qquad RBF(x) = \sum_{i=1}^{k} w_i \exp\left( -\frac{1}{2} \sum_{j=1}^{d} s_{ij}^2 (x_j - \mu_{ij})^2 \right)$$

$$(7) \qquad RBF1(x) = \frac{\sum\limits_{i=1}^{k} w_i \cdot \kappa_i \cdot \exp\left(-\frac{1}{2}\sum\limits_{j=1}^{d} s_{ij}^2 (x_j - \mu_{ij})^2\right)}{\sum\limits_{i=1}^{k} \kappa_i \cdot \exp\left(-\frac{1}{2}\sum\limits_{j=1}^{d} s_{ij}^2 (x_j - \mu_{ij})^2\right)}$$

Die Zugehörigkeitsfunktion D(x) kann folglich direkt mit Hilfe eines neuronalen Netzes vom RBF-Typ berechnet werden, wodurch der Umfang der zur Durchführung des erfindungsgemäßen Verfahrens benötigten Software verringert werden kann.

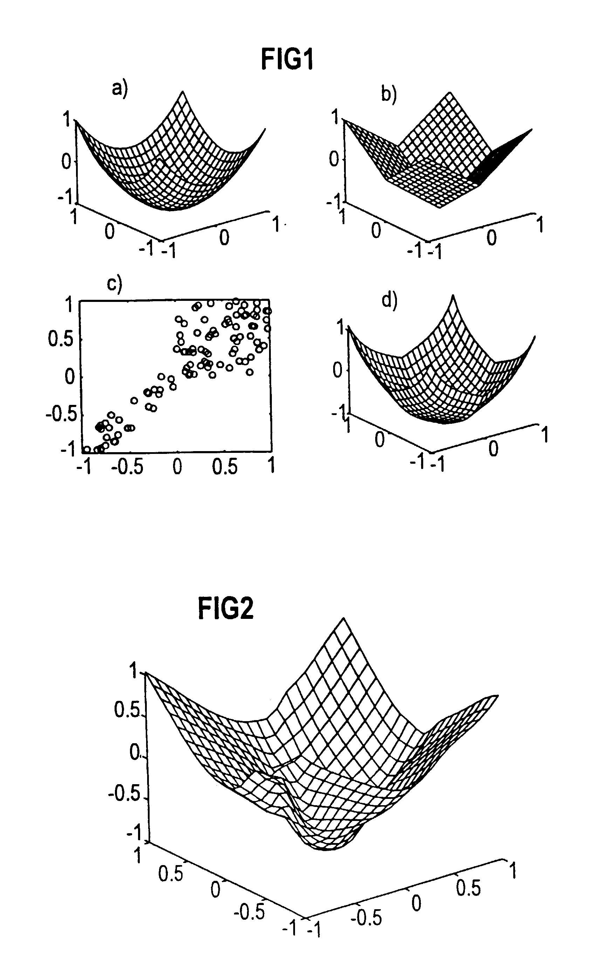

Das erfindungsgemäße Verfahren kann besonders gut an einem sehr einfachen, 2-dimensionalen Beispiel erläutert werden, bei dem die Daten auf der Hauptdiagonalen und im ersten Quadranten liegen (siehe Figur 1 c). Während die Daten eine Abhängigkeit gemäß $y_1 = x_1^2 + x_2^2 - 1$ beschreiben, ist als Ersatzfunktion bzw. Default-Verhalten $y_2 = |x_1| + |x_2| - 1$ vorgegeben (siehe Figur 1 a, b). Diese Abweichung zwischen Daten und Ersatzfunktion erscheint typisch, da bei einer Übereinstimmung beider eine Approximation mit neuronalen Netzen überhaupt nicht notwendig wäre. Figur 1 d zeigt eine graphische Darstellung einer Approximation mit Hilfe des Ansatzes

$$\hat{y} = \frac{D(x)\cdot MLP(x) + \max(1-D(x),0)\cdot y_1(x)}{D(x) + \max(1-D(x),0)}$$

bei dem die Ausgabe eines mit den Trainingsdaten trainierten Netzes und einer Ersatzfunktion entsprechend der Zugehörigkeitsfunktion gewichtet gemittelt werden. Offensichtlich reproduziert dieser Ansatz auf der Diagonalen und im ersten Quadranten die Funktion $y_1$ und im zweiten und vierten Quadranten die Funktion $y_2$.

Allgemein gilt, daß in bestimmten Anwendungsfällen die Netzstruktur (Ersatzfunktion) aufgrund von a priori Wissen derart restriktiv gewählt werden kann, daß ein im Teileingaberaum trainiertes Netz aufgrund der Struktur automatisch richtig auf den gesamten Eingaberaum extrapoliert. Beispiele sind lineare Ansätze, in denen die Parameter an beliebiger Stelle im Eingaberaum gelernt werden können. Auch die Fälle, in denen in einer bekannten chemischen Formel nur wenige Parameter identifiziert werden, fallen in diese Kategorie. Die freien Parameter werden wie üblich durch Minimierung der (quadratischen) Fehlerabweichung mittels Gradientenabstieg bestimmt. Falls für eine bestimmte Problemstellung eine besonders geeignete Ansatzfunktion bekannt ist, ist diese einem unstrukturierten Netzansatz vorzuziehen, da sie i. a. im gesamten Eingaberaum zu einer besseren Generalisierung führt und häufig auch einfacher zu optimieren ist. Der Einsatz neuronaler Methoden ist jedoch gerade immer dann sinnvoll, wenn konkrete Modellansätze nicht zu befriedigenden Ergebnissen führen oder nicht möglich sind.

Bei einigen wichtigen Anwendungsfällen stellt das Default-Verhalten, welches durch die Funktion f repräsentiert wird, bereits eine einigermaßen vertrauenswürdige Approximation der durch die Meßdaten definierten Funktion dar, und zwar im gesamten Eingabebereich. Dies ist typischerweise bei solchen Anwendungen der Fall, bei denen eine bestehende Approximationsformel durch neuronale adaptive Techniken verfeinert werden soll. Im Bereich D der Meßdaten soll das neuronale Netz die Approximation verbessern, während abseits der Meßdaten die bekannte Formel allein gültig bleibt (Extrapolation).

Als besonders einfaches und wirksames Verfahren bietet es sich hier an, das Netz mit einer Mischung aus generierten Formeldaten und Meßdaten zu trainieren [RH92]. Dazu generiert man anhand der Formel im gesamten Eingaberaum zusätzlich künstliche Daten anhand der durch die Funktion f gegebenen Formel. Diese Formeldaten werden mit den Meßdaten gemischt, und das Netzwerk wird mit dem erweiterten Datensatz trainiert. Das Mischungsverhältnis reflektiert im Bereich der Daten das Vertrauen in die Formel bzw. in die Daten. Dieses Verfahren führt dazu, daß das Netz im Meßdatenbereich eine Mittelung zwischen Daten und Formel entsprechend dem Mischungsverhältnis erlernt, während außerhalb der Meßdaten nur Formelwissen gelernt wird.

Mathematisch läßt sich dieses Verfahren wie folgt formulieren:
Beim Netzwerktraining wird die Fehlerfunktion um den Strafterm Gleichung 9 erweitert und die kombinierte Fehlerfunktion Gleichung 10 wird minimiert. Während der erste Term wie üblich die Abweichung zwischen Netzausgang und Meßwerten bestraft, bestraft der Strafterm die Abweichung zwischen Netz und Formel. Wertet man das Integral mit Hilfe der Montecarlo-Integration, d. h. unter Verwendung von Zufallszahlen aus, entspricht die Integralauswertung gerade der Generierung von Formeldaten an zufällig ausgewählten Eingabepunkten. Diese Formulierung zeigt, daß in verschiedenen Optimierungsschritten unterschiedliche Formeldaten verwendet werden können [THA 93].

$$(9) \qquad E_p = \int dx\, (f(x)\text{-}NN(x))^2$$

$$(10) \qquad E_p = \sum_p (y_p - t_p)^2 + \int dx \big(f(x) - NN(x)\big)^2$$

Figur 2 zeigt grafisch das Approximationsergebnis mit einem Multilayer-Perceptron mit zehn versteckten Neuronen, wobei den Trainingsdaten gleich viele gleich verteilte Formeldaten im gesamten Eingabebereich beigefügt wurden. Während abseits der Meßdaten das Default-Verhalten gelernt wird, kommt es im Bereich der ursprünglichen Trainingsdaten zu der erwarteten Mittelung zwischen Default-Verhalten und Meßdaten.

Der Vorteil dieser Vorgehensweise ist, daß hierbei die Verwendung beliebiger Topologien und Netzwerktypen möglich ist. Auch die Formel kann in beliebiger Form, z. B. als Programm, vorliegen. Der Ansatz ist effizient in der Recall-Phase, da nur das Netzwerk ohne jeglichen Mehraufwand ausgewertet werden muß. Das Problem partiell repräsentativer Daten ist vollständig in die Trainingsphase verlagert. Dem steht als Nachteil gegenüber, daß sich das zusätzliche Formelwissen in der Netzgröße und damit im Trainingsaufwand niederschlägt. Zur Darstellung der Formel außerhalb der Meßdaten werden zusätzliche Neuronen benötigt und es werden mehr Lerndaten verwendet. Dies führt zu langsameren und komplexeren Training. Gegenüber anderen Möglichkeiten zur Kombination einer Formel mit Daten führt das Datenmischen jedoch zu den glattesten Approximationen. Oft werden die Netze nicht wesentlich größer, falls die Formel eine glatte Extrapolation der Meßdaten definiert.

In besonderen Anwendungsfällen kann das Netzwerk auch anfänglich so konstruiert werden, daß die Formel genau reproduziert wird. Ein derart gut initialisiertes Netz lernt wesentlich schneller. Trainiert wird jedoch nach wie vor mit einer Mischung aus Formel- und Meßdaten, um ein Abdriften des Netzwerkes vom initialen Formelverhalten zu verhindern.

Als wichtigster Fall ist in diesem Zusammenhang der Fuzzy-Neuro-Ansatz nach Tresp [THA 93] zu nennen. Dort werden geeignete Regeln eineindeutig in ein RBF1-Netz übersetzt. Das Netz wird durch Training verfeinert und nach dem Training können die modifizierten Regeln wieder extrahiert werden. Das Problem partieller Trainingsdaten wird hierbei also dadurch gelöst, daß im ganzen Eingabebereich gültige Expertenregeln als Default-Funktion verwendet werden. Ein weiterer Vorteil der Verwendung von Expertenregeln zur Netzinitialisierung liegt darin, daß durch die brauchbare Initialisierung auch Regelungs-Anwendungen mit Online-Adaption möglich werden (Fahradfahrer). Leider stehen als Netzwerktyp nur RBF1-Netze zur Verfügung.

Das bereits beschriebene Datenmischen führt im Bereich der Meßdaten zu einer Mittelung zwischen Default- und gemessenen Werten. Oft ist dies nicht erwünscht, z. B. wenn eine bestehende ungenaue Formel durch sehr verläßliche Daten verfeinert werden soll, oder wenn eine Default-Vorgabe nur im Sinne einer Ausnahmebehandlung möglich ist. In beiden Fällen wird den Meßdaten höheres Vertrauen entgegengebracht als der Default-Funktion.

Für diese Aufgabenstellung des partiellen Lernens ist ein zweistufiges Vorgehen besonders geeignet, welches nachstehend beschrieben wird:

- Zunächst wird mit einem Clusterverfahren die Zugehörigkeitsfunktion D(x) gebildet, die für einen beliebigen Datenpunkt den Zugehörigkeitsgrad zum Meßdatenbereich angibt.

- Danach wird anhand der Zugehörigkeitsfunktion und einer unter Umständen partiell gültigen Approximationsfunktion eine globale Modellfunktion konstruiert, die glatt zwischen dem Meßdatenbereich und dem Default-Bereich überblendet.

Im folgenden soll zunächst ein Clusterverfahren beschrieben werden. Dem Fachmann ist klar, daß anstelle dieses beispielhaft beschriebenen Verfahrens, welches auch als K-Means Clustering bezeichnet wird, auch andere Clustering-Verfahren verwendet werden könnten. Aufgabe dieser Verfahren ist in allen Fällen eine Anzahl k von Clusterzentren und Varianzen zu ermitteln, mit denen eine Zugehörigkeitsfunktion für den Meßdatenbereich nach Gleichung 1 definiert wird.

K-Means Clustering [LBG 80] bestimmt k Cluster-Zentren derart, daß die Summe der Abstände jedes Datenpunktes zum jeweils nächst gelegenen Zentrum minimiert wird, d. h. es wird ein Minimum bestimmt für die Fehlerfunktion

$$(11) \qquad E = \sum_{p=1}^{N_p} \left\| x_p - \mu_{nearest(p)} \right\|^2 = \sum_{i=1}^{k} \sum_{x_p \in C_i} \left\| x_p - \mu_i \right\|^2$$

K-Means Clustering ist ein iterativer Algorithmus. Die Grundidee besteht darin, in jedem Iterationsschritt jeden Datenpunkt dem nächstgelegenen Zentrum zuzuordnen und dann jedes Zentrum $\mu_i$ auf den Schwerpunkt der zugehörigen Datenmenge $C_i$ zu verschieben. Der Algorithmus terminiert, wenn keine Veränderung der Zentren mehr auftritt, d. h. wenn alle Zentren im Schwerpunkt der zum Cluster gehörigen Datenpunkte liegen. Zur Initialisierung dieses Clustering-Algorithmus werden die Zentren auf zufällig gewählte Datenpunkte plaziert.

Das K-Means Clusteringverfahren ist auch unter dem Namen lineare Vektorquantisierung bekannt und wird in vielen Anwendungen zur Datenreduktion verwendet, in dem hochdimensionale Vektoren näherungsweise durch das nächstliegende Zentrum repräsentiert werden. Der Algorithmus konvergiert sehr schnell im Vergleich zu Gradientenmethoden. Für jedes Cluster wird - nach der Bestimmung der Zentren - die Varianz approximiert durch

$$(12) \qquad \sigma_{ij}^2 = \frac{1}{|C_i|} \sum_{p \in C_i} \left( x_{pj} - \mu_{ij} \right)^2$$

Der Vollständigkeit halber sei erwähnt, daß die a priori Wahrscheinlichkeit, daß ein beliebiger neuer Datenpunkt in das i-te-Cluster fällt, approximiert werden kann durch

$$(13) \qquad \kappa_i = \frac{|C_i|}{N_p}$$

Eine Zugehörigkeitsfunktion nach Gleichung (1) ergibt sich durch $s = \sigma^{-1}$. A priori Wahrscheinlichkeiten werden dazu nicht benötigt, d.h. alle Cluster sind gleich wichtig. Beim K-Means-Clustering werden also zunächst die Zentren bestimmt und erst im Nachhinein die Breiten der einzelnen Cluster.

Alternative Algorithmen zum K-Means-Clustering-Algorithmus sind der EM-Algorithmus zur Schätzung parametrisierter Verteilungsdichten oder der sogenannte "soft" K-Means-Clustering-Algorithmus, bei dem die Abstände der Daten zu mehreren benachbarten Zentren miminiert werden.

Mit den in dieser Anmeldung beschriebenen oder dem Fachmann sonst bekannten Clustering-Verfahren steht eine Methode zur Verfügung, um den Datenbereich D zu repräsentieren. Die Zugehörigkeitsfunktion D(x), definiert mit den Werten des Clustering-Algorithmus, ist kontinuierlich, nimmt nur positive Werte an, wird auf den Daten maximal und verschwindet abseits der Daten.

Die Bestimmung der Breiten nach der statistischen Varianz hat jedoch Nachteile für die Anwendung als Indikatorfunktion:

- Zum einen läßt sich der Zusammenhang zwischen Varianz und der Wahrscheinlichkeit, daß Daten innerhalb eines Vielfachen des Varianzbandes liegen, nicht erfassen. Während im ein-dimensionalen Fall gilt, daß 63% der Daten innerhalb des Varianzbandes liegen, und 96 % innerhalb des doppelten Varianzbandes, wird dieser Zusammenhang in höheren Dimensionen äußerst kompliziert.

- Darüberhinaus ist diese Beziehung mathematisch nur dann zutreffend, falls die Daten innerhalb jedes Clusters normalverteilt sind. Dies ist natürlich in der Praxis häufig nicht der Fall.

Es erscheint deshalb nicht sinnvoll, aufgrund der statistischen Überlegungen Schwellwerte für die Zugehörigkeit so zu definieren, daß ein bestimmter Prozentsatz der Meßdaten als zugehörig eingestuft wird. Ein solcher Entwurfsparameter ist aber für praktische Anwendungen enorm wichtig. Man legt damit fest, ob die Repräsentation des Datenbereichs konservativ, d. h. eher eng, durchgeführt werden soll, oder nicht. Dies entspricht der Frage, ob man mehr Vertrauen in die Daten oder in die Ersatzfunktion hat. Im ersten Fall würde man die Zugehörigkeitsfunktion großzügig abschätzen, und läßt sich dabei von der Idee leiten, daß die Daten sehr gut sind, und somit die Netzwerkextrapolation im Randbereich vertrauenswürdig ist. Im zweiten Fall würde man kleine Zugehörigkeitfunktionen generieren aufgrund der Vorstellung, daß schon die Daten am Rand des Meßbereichs wahrscheinlich ungenau sind, und man nur dort, wo wirklich viele Daten sind, den Daten mehr traut als der Ersatzfunktion.

Es bietet sich deshalb als praktikable Lösung an, die Breiten der einzelnen Cluster nicht allein nach der Varianz zu bestimmen, sondern so zu skalieren, daß für einen vorgegebenen Prozentsatz der Daten die Zugehörigkeitsfunktion einen vorgegebenen Schwellwert übersteigt. Ohne Einschränkung der Allgemeinheit kann dieser Schwellwert zur Vereinfachung mit dem Wert 1 belegt werden. Der Prozentsatz ist ein Entwurfsparameter mit der Voreinstellung 0,95.

Verallgemeinert auf mehrere Dimensionen und mehrere Cluster wird die Gewichtung also so skaliert, daß das Zugehörigkeitskriterium

$$(22) \qquad D(x) = \exp(1/2)\sum_{i=1}^{k}\exp(-1/2\sum_{j=1}^{d}s_{ij}^2(x_j-\mu_{ij})^2) \geq 1$$

für 95% der Trainingsdaten zutrifft. Durch die Wahl des Vorfaktors **exp(1/2)** entspricht dies für eine einzige Glockenfunktion gerade der Bedingung, daß 95% der Daten innerhalb der Wendepunkte liegen sollen. Diese Skalierung umgeht die analytischen Probleme bei der Integration von Gaußglocken in hohen Dimensionen und vermeidet damit die implizite Annahme gaußverteilter Trainingsdaten.

Der passende Skalierungsfaktor wird durch eine binäre Suche bestimmt. Dabei wird die Skalierung für jedes Cluster zunächst einzeln durchgeführt und anschließend für die überlagerte Funktion D(x). Vorteilhafter Weise geht man dabei von den statistischen Varianzen aus, deren Verhältnis innerhalb des Clusters erhalten bleibt.

Eine scharfe Grenze zwischen Bereichen mit und Bereichen ohne Daten läßt sich im allgemeinen schwer ziehen. Es ist deshalb zweckmäßig, den Bereich

$$(23) \qquad 1 > D(x) > \varepsilon$$

als Übergangsbereich zu definieren. Daten in diesem Bereich werden weder als sicher zugehörig noch als sicher nicht zugehörig klassifiziert. Ihre Behandlung erfolgt je nach dem konkret vorliegenden Anwendungsfall unterschiedlich unter Berücksichtigung des Kontexts. Als Voreinstellung für $\varepsilon$ wird 0,5 verwendet.

Die Summation der Glockenfunktionen ohne Normierungsfaktoren der Normalverteilung und ohne Gewichtung mit der a priori Wahrscheinlichkeit hat gegenüber der Verwendung der Dichte mehrere Vorteile:

- In unserem Anwendungszusammenhang ist es nicht primär relevant, wie wahrscheinlich Daten an einer bestimmten Stelle sind, sondern nur, ob Daten vorhanden waren oder nicht. Die Normierungsfaktoren der Gaußglocken und die a priori Wahrscheinlichkeiten werden dadurch überflüssig.

- Die Summation sorgt im Prinzip nur für eine weiche Maximumbildung und stellt zudem sicher, daß Bereiche zwischen mehreren Clustern stärker gewichtet werden als Randdaten. Überlappen sich die Cluster unwesentlich, liefert die Summation ohne Gewichtung den Abstand zum nächst gelegenen Zentrum als Wert in [0...1]. Bei Überlappung addieren sich einzelne Anteile.

- D(x) liegt im Bereich [0...k], während für die Dichtefunktion eine solche Aussage nicht gemacht werden kann.

Es sei an dieser Stelle darauf hingewiesen, daß der Fachmann anhand des ihm zur Verfügung stehenden Fachwissens alternative Methoden anstelle des sogenannten K-Meansclustering einsetzen kann wie z. B. die Dichteschätzung mit dem sogenannten EM-Algorithmus. Alternativ dazu kann sich der Fachmann auch der Anwendung des sogenannten Soft K-Meansclustering bedienen, bei dem die Abstände der Daten zu mehreren benachbarten Zentren minimiert werden. Weitere Varianten sind dem Fachmann anhand der ihm zur Verfügung stehenden Fachliteratur geläufig.

Bei der Anwendung der mit Hilfe des erfindungsgemäßen Verfahrens bestimmten Zugehörigkeitsfunktion hat der Anwender verschiedene Möglichkeiten. Bei einer ersten Möglichkeit werden die Ausgangsdaten des Netzwerks mit den Daten einer Ersatzfunktion entsprechend der Datenverteilung gemittelt. Dabei geht man davon aus, daß zwei unterschiedliche Approximationsmodelle vorliegen, nämlich das Netzwerk und die Ersatzfunktion. Beide Modelle haben jedoch verschiedene, z. T. überlappende Gültigkeitsbereiche. Im Bereich der Daten vertraut man dem gelernten Modell mehr, während man außerhalb der Meßdaten das durch die Ersatzfunktion gegebene Modell bevorzugt.

Allgemein erfolgt die Kombination verschiedener Modelle f1 und f2 mit unterschiedlichen Gültigkeitsbereichen nach der allgemeinen Formel

$$(24) \qquad \hat{y} = \frac{b_1(x)f_1(x)+b_2(x)f_2(x)}{b_1(x)+b_2(x)}$$

Dabei bezeichnet $b_i(x) \geq 0$ das jeweilige Vertrauen in das Modell i im Datenpunkt x.

In unserem Fall entsprechen den beiden Modellen das neuronale Approximationsmodell NN und die Ersatzfunktion f. Für das Vertrauen in das Netzwerk kann direkt die Zugehörigkeitsfunktion D(x) gemäß Formel (1) verwendet werden. Zur Beschreibung des Komplementärbereiches definieren wir

$$(25) \qquad \bar{D}(x) = \max(0, 1 - D(x))$$

Die Zugehörigkeitsfunktion $\bar{D}(x)$ für den Komplementärbereich wird also innerhalb der Meßdaten 0 und wächst nach außen exponentiell gegen 1. Als Approximationsformel ergibt sich die gewichtete Mittelung

$$(26) \qquad \hat{y} = \frac{D(x)NN(x)+\bar{D}(x)f(x)}{D(x)+\bar{D}(x)}$$

Die beschriebene Vorgehensweise der Modellkombination ist besonders für MLP-Netze geeignet, um deren glatte Approximationseigenschaften im Datenbereich auszunutzen. Diese Vorgehensweise ist jedoch prinzipiell auf alle Netzwerktypen anwendbar. Das Netzwerk benötigt hierbei keine Ressourcen für die Darstellung der Ersatzfunktion.

Eine weitere Methode bedient sich der Idee zusätzlich generierter Ersatz-Daten (Default-Daten). Dabei gilt es das Verhalten der Ersatzfunktion nur außerhalb des Meßbereichs zu erzeugen und innerhalb nur anhand der Meßdaten zu approximieren. Dies wird dadurch erreicht, daß - nach Bestimmung der Zugehörigkeitsfunktion - zusätzliche Default-Daten nur außerhalb des Meßbereichs generiert werden.

Zur Erzeugung zusätzlicher Ersatz-Daten (Default-Daten) bestimmen wir zunächst die Indikatorfunktion $\chi_D$ wie bereits beschrieben. Neue zusätzliche Default-Daten (x, f(x)) werden nun im Verhältnis von Meßbereich zu nicht - abgedecktem Bereich generiert. Dazu werden Zufallseingaben (im normierten) Definitionsbereich $[-1,1]^n$ generiert. Fällt ein solcher Datenpunkt nicht in den Meßdatenbereich ($\chi_D = 0$), wird er zur Trainingsmenge hinzugefügt, liegt er innerhalb ($\chi_D \neq 0$), so wird statt dessen ein Meßwert zugefügt. Es werden keine Daten im Unsicherheitsbereich generiert. Wenn alle Meßdaten aufgenommen sind, stoppt die Generierung. Auf diese Weise entspricht die Datendichte außerhalb des Meßbereichs der durchschnittlichen Dichte im Meßbereich. Da jedoch in hohen Dimensionen Meßdaten sehr dünn liegen, werden maximal doppelt so viele Default-Daten generiert wie Meßdaten vorhanden sind. Auch diese Vorgehensweise ist für beliebige Netztypen anwendbar; die entstehenden Approximationen sind auch im Übergangsbereich sehr glatt. Für die Approximation über den gesamten Raum werden zusätzliche Neuronen benötigt. Der Lernaufwand bei dieser Vorgehensweise erhöht sich durch größere Netze und die erhöhte Anzahl von Trainingsdaten.

Als wesentlicher Vorteil gegenüber den zuerst geschilderten Modellkombinationen ergibt sich, daß das partielle Lernen vollständig in die Lernphase verlagert ist. Bei der Anwendung (Recall) muß die Zugehörigkeitsfunktion nicht ausgewertet werden. Da die Netze zur Integration des Default-Verhaltens (Ersatzfunktion) in unseren Beispielen weniger Neuronen benötigen als die Zugehörigkeitsfunktion selbst, wird die Durchführung der Anwendung (Recall) schneller.

Noch wichtiger aber ist, daß die Performanz beider Vorgehensweisen wesentlich von der Qualität der Zugehörigkeitsfunktion abhängt, die durch eine Vergrößerung der Clusterzahl gesteigert werden kann. Dies geht auf Kosten des Rechenzeitbedarfs. Beim Datenmischen fällt dieser erhöhte Aufwand jedoch nur während der Datengenerierung an. Es ist deshalb vom Rechenaufwand vertretbar, auf Clustering (Datenreduktion) zu verzichten und stattdessen direkt die Datenpunkte als Cluster-zentren zu verwenden.

Eine dritte mögliche Vorgehensweise macht sich die Tatsache zu nutzen, daß radiale Basisfunktionsnetze weit ab von den Zentren automatisch die Ausgabe 0 erzeugen. Ist also das gewünschte Default-Verhalten gerade durch $f \equiv 0$ gegeben, so ist zu erwarten, daß RBF-Netze keine oder verhältnismäßig wenige zusätziche Neuronen zur Darstellung des Default-Verhaltens benötigen.

Ein gewünschtes Default-Verhalten $f \equiv 0$ läßt sich durch eine einfache Transformation der Problemstellung erreichen. Anstatt mit Meßdaten (x, y) und Default-Daten (x',f(x')) zu trainieren, trainiert man ein RBF-Netz mit Trainingsdaten (x,y-f(x)) und (x',0). Das Netz lernt also im Datenbereich die Differenz zwischen Daten und Default (Ersatzfunktion) und außerhalb des Datenbereichs die 0. Bei der Anwendung (Recall) muß dann die Netzausgabe zur Defaultfunktion addiert werden gemäß der Formel

$$(28) \qquad \hat{y} = NN(x) + f(x)$$

Um ein Auseinanderdriften der Cluster bei der Approximation aus dem Meßdatenbereich zu verhindern könnte man einen Strafterm addieren, um Zentren und Varianzen nahe der Anfangswert zu halten. Tut man dies, so endet das Lernen meistens in einem lokalen Minimum. Zum Training des Netzes bieten sich deshalb zwei mögliche Vorgehensweisen an: Zum einen kann man wiederum die Methode der Datengenerierung verwenden. Der Unterschied besteht dabei in der Verwendung des RBF-Netzwerks und darin, daß alle Default-Daten die Ausgabe 0 erzeugen sollen. Dabei ist zu beachten, daß das RBF-Netz zwar mit einer Zugehörigkeitsfunktion initialisiert werden kann, um eine günstige Startverteilung für die Zentren zu erreichen, daß es aber nach der Optimierung nicht mehr als Zugehörigkeitsfunktion verwendet werden kann, da sich Zentren und Varianzen verändern.

Eine zweite Möglichkeit besteht darin die Basisfunktionen der Zugehörigkeitsfunktion direkt zu verwenden. Nur die Ausgangsgewichte werden dabei für die Approximation neu bestimmt. Da der Hauptaufwand in der Netzwerkberechnung bei der Berechnung der Basisfunktionen liegt, kann mit diesem Ansatz die Approximation zusammen mit der Zugehörigkeitsfunktion effizient berechnet werden.

In der Optimierung werden die Werte für Zentren und Varianzen festgehalten. Die Bestimmung der Gewichte geschieht effizient mit der Least-Squares-Ausgleichsrechnung (Methode der kleinsten Quadrate). Ist die Zugehörigkeitsfunktion gegeben durch

$$(29) \qquad D(x) = \exp(1/2) \sum_{i=1}^{k} \exp(-1/2 \sum_{j=1}^{d} s_{ij}^2 (x_j - \mu_{ij})^2)$$

so muß das Gleichungssystem

$$(30) \qquad B(X)W = Y - f(X) \quad \text{mit} \quad B_{pi} = \exp(-1/2 \sum_{j=1}^{d} s_{ij}^2 (x_j - \mu_{ij})^2))$$

approximativ gelöst werden.

Das hieraus resultierende Netz hat die folgenden Eigenschaften:

- Mit den Ausgangsgewichten exp(1/2) dient es als Indikatorfunktion.

- Mit den Ausgangsgewichten W der Regression approximiert es die Meßdaten bzw. deren Differenz zur Ersatzfunktion.

- Außerhalb der Trainingsdaten implementiert das Netz das Verhalten der Ersatzfunktion f=0 ohne zusätzliche Neuronen.

Um die später zu lösende Aufgabe der Approximation schon bei der Zugehörigkeitsfunktion zu berücksichtigen, erfolgt das Clustering im Produktraum der Ein- und Ausgabedaten. Nur die Zentren für die Eingabedimensionen werden nachher für die Zugehörigkeitsfunktion verwendet.

In dieser Patentanmeldung wurde auf die folgenden Veröffentlichungen Bezug genommen:

[LBG80]    Y. Linde, A. Buzo and R.M. Gray, An Algorithm for Vector Quantizer Design, IEEE Transactions on Communications, Vol. COM-28, No. 1, 1980;

[RH92]    M. Roescheisen, H. Hoffmann and V. Tresp, Neural control for rolling mills: incorporating domain theories to overcome data deficiency. In J. Moody et al. (Eds.), NIPS 4, Morgan Kaufmann, 1992;

# EP 0 777 881 B1

[THA93]    V. Tresp, J. Hollatz and S. Ahmed, Network structuring and training using rule-based knowledge. In S.J. Hanson et al. (Eds), NIPS V, Morgan Kaufmann, 1993;

**Patentansprüche**

1.  Verfahren zur Festlegung des Gültigkeitsbereichs für ein künstliches neuronales Netzwerk, dessen Netzwerkparameter so eingestellt sind, daß das Netzwerk einen Satz von Trainingsdaten in einem d-dimensionalen Trainingsdatenraum repräsentiert, mit folgenden Merkmalen:

    a) Durchführung eines Clusteringverfahrens, hierbei werden eine geeignet gewählte Anzahl K Mittelwert-Vektoren und K Kovarianzmatrizen in einer Weise ermittelt, daß der Satz von Trainingsdaten in K Teildatensätze unterteilt wird, denen jeweils ein Mittelwert-Vektor zugeordnet ist;
    b) die Dichte der Trainingsdaten D wird mit Hilfe einer linearen Überlagerung der geeignet gewählten Anzahl K von d-dimensionalen Gauß-Funktionen angenähert;
    c) die Kovarianzmatrizen werden daraufhin so skaliert, daß eine Zugehörigkeitsfunktion D(x) für einen geeignet gewählten Anteil. der Trainingsdaten einen vorgegebenen Wert erreicht, wobei die Zugehörigkeitsfunktion D (x) den Zugehörigkeitsgrad eines Punktes x zu den Mittelwert-Vektoren angibt;
    d) der Punkt x des Trainingsdatenraums wird dann als zum Gültigkeitsbereich des künstlichen neuronalen Netzes gehörig angesehen, wenn die Zugehörigkeitsfunktion D(x) den vorgegebenen Wert erreicht.

2.  Verwendung eines mit Hilfe des Verfahrens nach Anspruch 1 festgelegten Gültigkeitsbereichs für ein künstliches neuronales Netzwerk, bei der mit Hilfe einer Ersatzfunktion zusätzliche Trainingsdaten außerhalb des Gültigkeitsbereichs erzeugt und zum Training des neuronalen Netzwerks verwendet werden.

3.  Verwendung eines mit Hilfe des Verfahrens nach Anspruch 1 festgelegten Gültigkeitsbereichs für ein künstliches neuronales Netzwerk, bei der eine gewichtete Mittelung der Werte einer Ersatzfunktion und der Werte des neuronalen Netzwerks ermittelt wird, deren Koeffizienten durch die Zugehörigkeitsfunktion D(x) in dem jeweiligen Punkt gegeben sind.

4.  Verwendung eines mit Hilfe des Verfahrens nach Anspruch 1 festgelegten Gültigkeitsbereichs für ein künstliches neuronales Netzwerk, bei der das Netzwerk die Differenz zwischen den Meßdaten und den Werten einer Ersatzfunktion lernt, und bei der das Netzwerk außerhalb des Gültigkeitsbereichs den Wert Null ausgibt.

**Claims**

1.  Method of establishing the validity range for an artificial neural network, the network parameters of which are set in such a way that the network represents a set of training data in a d-dimensional training data space, the method having the following features:

    a) the carrying out of a clustering method, here a suitably selected number of K mean value vectors and K covariance matrices are determined by dividing the set of training data into K data subsets, each of which is assigned a mean value vector;
    b) the density of the training data D is approximated with the aid of a linear superimposition of the suitably selected number K of d-dimensional Gauss functions;
    c) the covariance matrices are then scaled such that a membership function D(x) reaches a prescribed value for a suitably selected proportion of the training data, the membership function D(x) indicating the degree of membership of a point x to the mean value vectors;
    d) the point x of the training data space is then viewed as belonging to the validity range of the artificial neural network if the membership function D(x) reaches the prescribed value.

2.  Use of a validity range, established with the aid of the method according to Claim 1, for an artificial neural network, in which additional training data outside the validity range is generated with the aid of a substitute function and is used for training the neural network.

3.  Use of a validity range, established with the aid of the method according to Claim 1, for an artificial neural network, in which a weighted average of the values of a substitute function and of those values of the neural network is determined, the coefficients of which are given by the membership function D(x) at the respective point.

4. Use of a validity range, established with the aid of the method according to Claim 1, for an artificial neural network, in which the network learns the difference between the measurement data and the values of a substitute function, and in which the network outputs the value zero outside the validity range.

**Revendications**

1. Procédé permettant de déterminer le champ d'application d'un réseau neuronal artificiel dont les paramètres sont réglés de telle sorte que le réseau représente un jeu de données d'entraînement dans un espace de données d'entraînement à d dimensions, présentant les caractéristiques suivantes

a) on met en oeuvre une méthode de cluster, qui consiste à calculer un nombre approprié K de vecteurs de valeur moyenne et un nombre approprié K de matrices de covariance, de manière à diviser le jeu de données d'entraînement en K jeux de données partiels, auxquels est associé respectivement un vecteur de valeur moyenne ;
b) on approche la densité des données d'entraînement D, à l'aide d'un recouvrement linéaire, du nombre approprié K de fonctions de Gauss à d dimensions;
c) on cadre ensuite les matrices de covariance, de sorte qu'une fonction d'appartenance D(x) pour une partie appropriée des données d'entraînement atteigne une valeur donnée, la fonction d'appartenance D(x) indiquant le degré d'appartenance d'un point x aux vecteurs de valeur moyenne ;
d) on considère le point x de l'espace de données d'entraînement comme appartenant au champ d'application du réseau neuronal artificiel, si la fonction d'appartenance D(x) atteint la valeur donnée.

2. Utilisation d'un champ d'application déterminé à l'aide du procédé selon la revendication 1 pour un réseau neuronal artificiel, consistant à générer des données d'entraînement supplémentaires en dehors du champ d'application, à l'aide d'une fonction de substitution, et à les utiliser pour l'entraînement du réseau neuronal.

3. Utilisation d'un champ d'application déterminé à l'aide du procédé selon la revendication 1 pour un réseau neuronal artificiel, consistant à calculer une moyenne pondérée des valeurs d'une fonction de substitution et des valeurs du réseau neuronal, dont les coefficients sont définis par la fonction d'appartenance D(x) au point respectif.

4. Utilisation d'un champ d'application déterminé à l'aide du procédé selon la revendication 1 pour un réseau neuronal artificiel, selon laquelle le réseau apprend la différence entre les données mesurées et les valeurs d'une fonction de substitution, et selon laquelle le réseau édite la valeur zéro en dehors du champ d'application.

## FIG1

a)

b)

c)

d)

## FIG2